# EUROPEAN PATENT APPLICATION

(11) **EP 2 500 987 A1**
(43) Date of publication of application: **19.09.2012**
(21) Application number: 12001355.2
(22) Date of filing: 29.02.2012
(51) Int. Cl.: H01R 13/58, B60L 11/18

(54) **Wire holding member and charging connector provided therewith**

(30) Priority: 17.03.2011 JP 2011059437
(71) Applicant: Sumitomo Wiring Systems, Ltd., Yokkaichi-city, Mie 510-8503 (JP)
(72) Inventor: Osawa, Kiyoshi, Yokkaichi-City Mie 510-8503 (JP); Ichio, Toshifumi, Yokkaichi-City Mie 510-8503 (JP)
(74) Representative: Müller-Boré & Partner Patentanwälte

(57) **Abstract**

The present invention concerns a metal clip (60) to be mounted in a housing (11) constituting a charging connector (10). The metal clip (60) includes a box-shaped main body (61) formed by assembling a pair of half members (62) with each other. The main body (61) is prevented from moving in longitudinal and circumferential directions of a wire (W) relative to the housing (11) by the surface contact of the outer surface of the main body (61) with the inner surface of the housing (11). Wire insertion holes (67) through which the wire (W) is to be inserted are formed in outer surfaces of the main body (61). The wire insertion holes are formed by assembling the both half members (62) such that pairs of curved portions (66,66) formed by cutting butting edges of the both half members (62) in a curved manner face each other. The wire (W) is held in the main body (61) by being tightly held by the curved portions (66).

## Description

The present invention relates to a wire holding member used for a charging connector and to a charging connector provided therewith.

A wire holding member of this type is known, for example, from Japanese Unexamined Patent Publication No. 2002-324621. This is a cylindrical member made of rubber and formed with a plurality of wire insertion holes. After a plurality of wires are inserted through the wire insertion holes, the wire holding member is tightened up over the entire circumference by a tightening member such as a crimp ring, whereby the wires are held. The wire holding member holding the wires is housed in a housing of a charging connector.

However, since the above wire holding member holds the wires only by producing frictional forces between the inner peripheral surfaces of the wire insertion holes and the outer peripheral surfaces of the wires, the wire cannot be held such as when being pulled with a strong force exceeding the frictional force and there is a possibility of wire breakage in the housing. Thus, to increase a wire holding force, it is thought to strongly hold the wire, for example, using a wire holding clip, but it is necessary to also study the damage of the wire and the rotation of the wire holding member relative to the housing.

The present invention was completed in view of the above situation and an object thereof is to prevent the damage of a wire.

This object is solved according to the invention by the features of the independent claims. Preferred embodiments of the invention are subject of the dependent claims.

Accordingly, a wire holding member can be mounted in such a state as not to rotate relative to a housing while preventing the damage of a wire.

According to one aspect of the invention, there is provided a wire holding member to be mounted in a housing constituting or forming part of a charging connector, comprising a (particularly substantially box-shaped) main body formed by assembling a pair of half members with each other, wherein the main body is or is to be prevented from moving in longitudinal and/or circumferential directions of a wire relative to the housing by the surface contact of the outer surface of the main body with the inner surface of the housing; at least one wire insertion hole through which the wire is to be inserted is formed in the outer surface of the main body; the wire insertion hole is formed by assembling the both half members such that a pair of curved portions formed by cutting butting edges of the both half members in a curved manner substantially face each other; and the wire is or is to be held in the main body by being tightly held by the both curved portions.

According to this construction, since the (particularly box-shaped) main body is provided, the main body can be so mounted particularly as not to rotate relative to the housing by the surface contact of the outer surface of the main body with the inner surface of the housing. Further, since the wire insertion hole is formed by the both curved portions facing each other and the wire is tightly held by the both curved portions, the wire can be held in the main body while the damage thereof is prevented. Thus, in holding the wire by the wire holding member particularly made of metal, the wire holding member can be so mounted particularly as not to rotate relative to the housing while preventing the damage of the wire.

The present invention is preferably embodied to have the following constructions.

The pair of half members may be identical components.

According to this construction, the types of components can be reduced and component cost can be reduced.

The curved portions may be substantially arcuate.

According to this construction, a pressing force acting on the wire can be made uniform and the damage of the wire can be further prevented.

One or more escaping portions inclined radially outwardly of the wire insertion hole may be provided at the opposite ends of the curved portion.

According to this construction, parts of the wire can enter the escaping portions to prevent the damage of the wire even if the curved portions are excessively pressed against the outer peripheral surface of the wire in assembling the both half members.

A pair of wire insertion holes may be coaxially arranged while being spaced apart in the longitudinal direction of the wire.

According to this construction, pressing forces acting on the wire in the respective wire insertion holes can be reduced since the wire is held in the wire insertion holes at two positions. This can further prevent the damage of the wire.

According to a further aspect of the invention, there is provided a charging connector comprising a housing, wherein at least one wire is drawn out from the housing, the wire being held fixed with respect to the housing by a holding member according to the above aspect of the invention or a particular embodiment thereof, the holding member being mounted into a mounting portion provided in the housing.

The present invention is preferably embodied to have the following constructions.

The housing may be integrally formed by fixing a pair of half members to each other, particularly by bolting.

Aa connector connecting portion may be mounted in a front end portion of the housing and tightly held by the both half members; and at least one positioning portion for positioning the both half members may be provided at a position of one half member distant from the connector connecting portion and comes into contact with the inner surface of the other half member when the both half members are assembled in proper postures.

The mounting portion substantially may be bilaterally symmetrically divided by both half members and/or the mounting portion of the one half member and that of the other half member may be arranged to substantially face each other with the both half members assembled.

The positioning portion may be provided adjacent to the mounting portion. The half members may be fixed to each other by bolting.

A plurality of bolt fastening portions may be arranged in the one half member; and the positioning portion may be provided at such a position as to prevent the other half member from rotating upon receiving a force in a rotational direction produced as the bolting is performed at the bolt fastening portion arranged at a position most distant from the connector connecting portion.

The positioning portion may be connected to one opening edge of the one half member and the bolt fastening portion is connected to another opening edge substantially facing the one opening edge.

The housing may include a grip part which is arranged behind the connector connecting portion and from which at least one wire may be drawn out; and the positioning portion may be provided in the grip part.

According to the above, it is possible to mount a wire holding member in such a state as not to rotate relative to a housing while preventing the damage of a wire.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a perspective view of a charging connector,
FIG. 2 is a side view of the charging connector,
FIG. 3 is a perspective view showing a state where a cover-side housing is removed in FIG. 1,
FIG.4 is a perspective view showing only a base-side housing in FIG. 3,
FIG. 5 is a side view of a metal clip in FIG. 3 when viewed sideways,
FIG. 6 is a section showing the metal clip in FIG. 3 cut along a longitudinal direction of a wire to be divided into upper and lower parts when viewed sideways,
FIG. 7 is a section along A-A of FIG. 2,
FIG. 8 is a side view showing an inner surface side of the base-side housing,
FIG. 9 is a side view showing an inner surface side of the cover-side housing,
FIG. 10 is a section along B-B of FIG. 8,
FIG. 11 is a perspective view of a half member,
FIG. 12 is a plan view of the metal clip,
FIG. 13 is a side view of the metal clip,
FIG. 14 is a front view of the metal clip, and
FIG. 15 is a section along C-C of FIG. 12.

### <Embodiment>

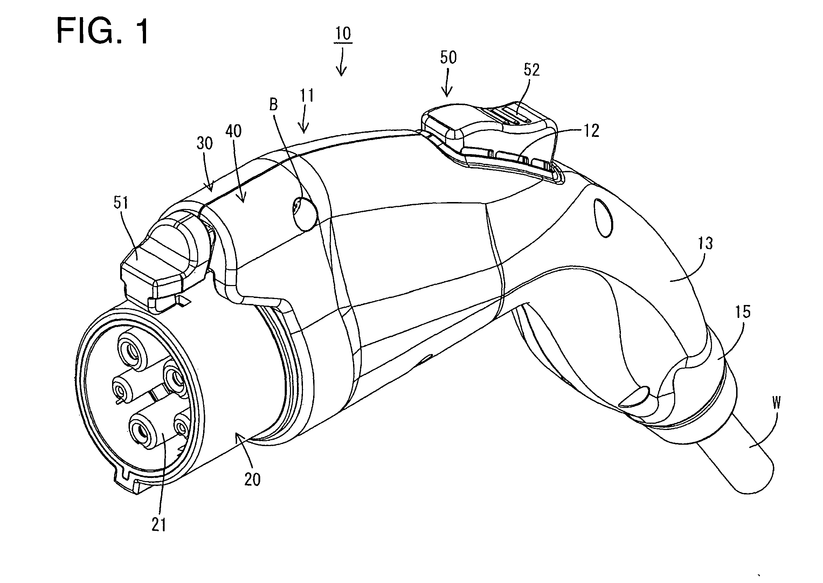

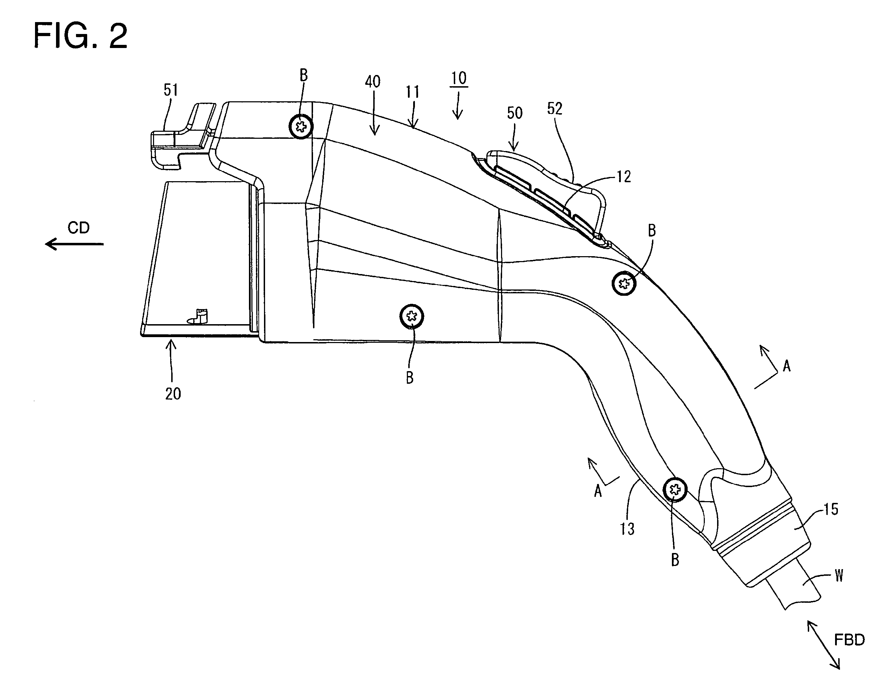

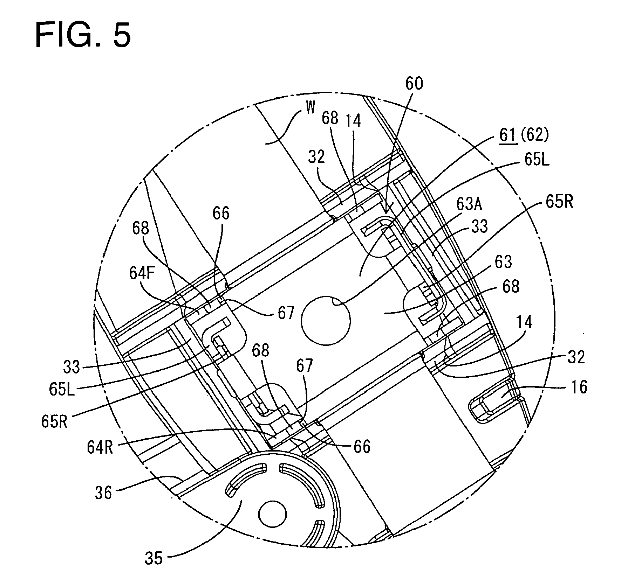

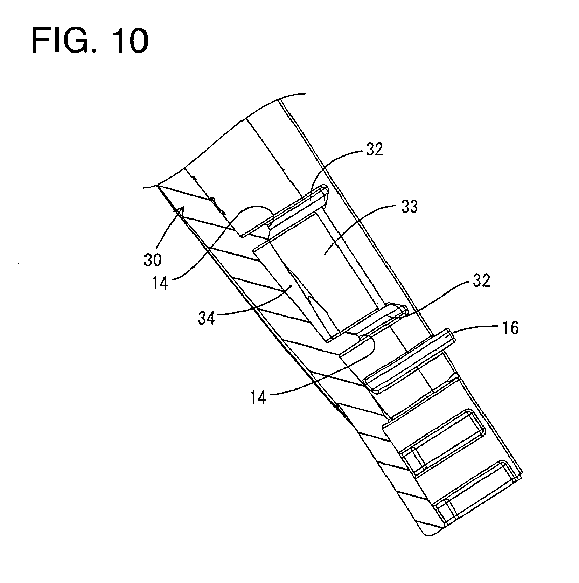

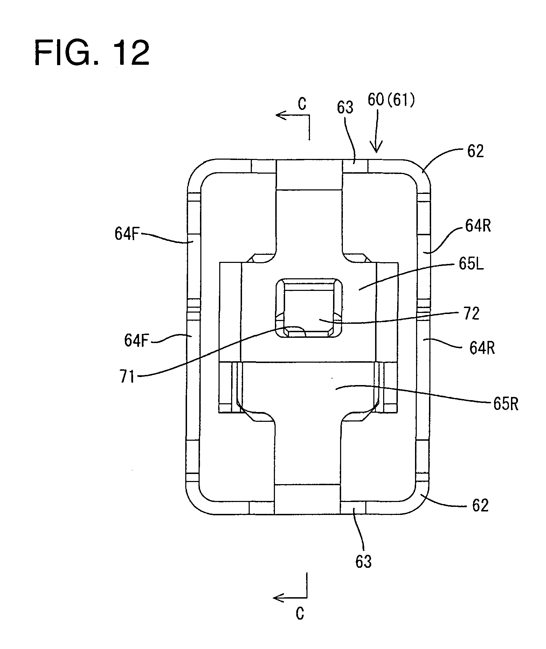

A particular embodiment of the present invention is described with reference to FIGS. 1 to 15. As shown in FIG. 1, a charging connector 10 in this embodiment includes a housing 11 particularly having a pistol shape (gun shape) as a whole and this housing 11 is composed of or comprises a front housing 20 connectable to a vehicle-side connector (not shown) and a base-side housing 30 and a cover-side housing 40 holding this front housing 20 from left and right sides. Further, as shown in FIG. 2, the housing 11 is fixed or fastened or separably mounted or openably assembled (particularly bolted by one or more, particularly a plurality of bolts B) by integrally assembling the base-side housing 30 and the cover-side housing 40 (particularly by these one or more bolts B). It should be understood that the housing 11 may be (alternatively or additionally) assembled by connecting the base-side housing 30 and the cover-side housing 40 by one or more clips, retaining members, latches, or similar coupling members.

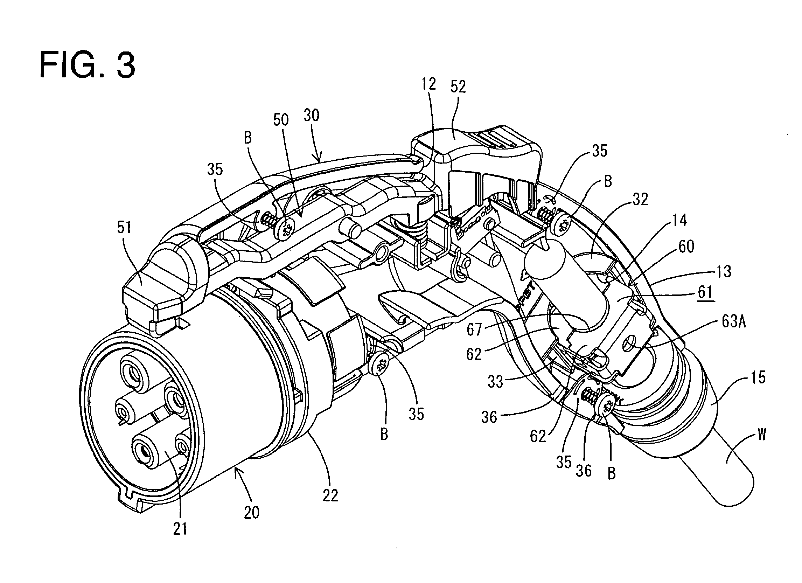

As shown in FIG. 3, at least one wire W of this embodiment is held in a (particularly metal) clip 60, which is housed in a grip part 13 as a hand-held part of the housing 11. The grip part 13 particularly substantially extends obliquely downward (at an angle different from 0° or 180°, preferably substantially obtuse angle with respect to a connecting direction CD of the front housing 20 to the vehicle-side connector) toward the rear side from a release button 52. Note that a longitudinal direction of the wire W is referred to as forward and backward directions FBD and a draw-out direction of the wire W is referred to as a backward direction in the following description on the internal structures of the grip part 13 and the (metal) clip 60.

The wire W is drawn out backward from the grip part 13. This wire W is to be connected to a household power supply, and a battery (not shown) installed in a vehicle is to be charged by connecting this charging connector 10 to the vehicle-side connector.

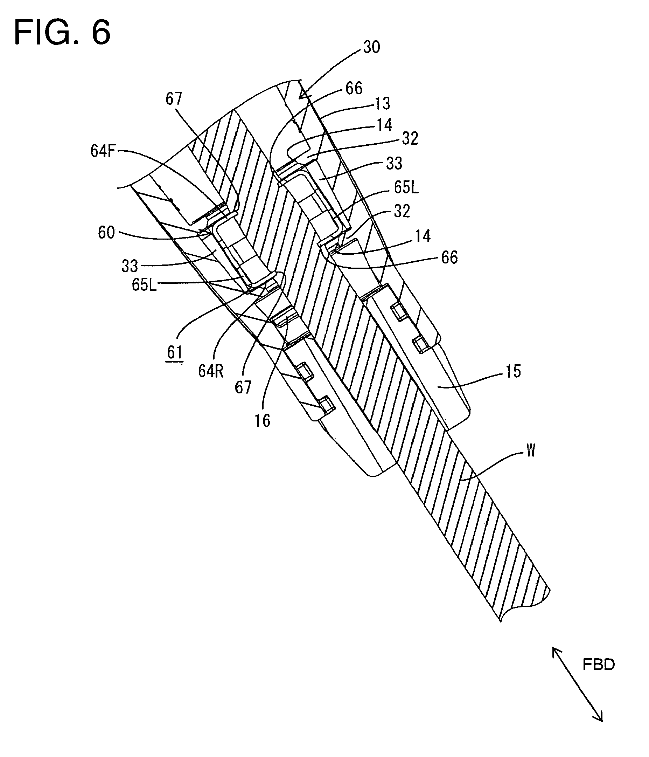

A contact (particularly rubber) bush 15 is mounted in a draw-out opening of the grip part 13 for the wire W. The contact (particularly rubber) bush 15 is made of a flexible or resilient material (such as flexible rubber material) and projects backward from the rear end of the grip part 13 as shown in FIG. 6. The contact (rubber) bush 15 is to be held or positioned on the inner peripheral surface of the grip part 13 while being retained in forward and backward directions FBD by mating engagement of projections and recesses. The wire W penetrates through the contact (rubber) bush 15, thereby being prevented from being damaged such as by the contact of the wire W with the rear end of the grip part 13 when the wire W is shaken in a vertical or lateral direction and/or providing sealing between the wire and the housing 11 (the grip part 13).

As shown in FIG. 3, a lever 50 is housed in the two housings 30, 40 and a lock claw 51 is provided on or near the front end of the lever 50. This lock claw 51 substantially projects forward (in connection direction CD) from the front end opening of the two housings 30, 40 and is arranged above or outward from the front housing 20. When the charging connector 10 is connected to the vehicle-side connector in the connecting direction CD, the lock claw 51 is engaged with a lock projection (not shown) provided on the vehicle-side connector in the connecting direction CD, whereby the charging connector 10 and the vehicle-side connector are held in a connected state.

On the other hand, the release button 52 is provided on or near the rear end of the lever 50. This release button 52 is provided to project outward or upward through a release window 12 formed in (particularly a rear end corner portion of) the housing 11 (particularly an upper or outer end corner portion of the grip part 13). When this release button 52 is operated (e.g. pushed down or inward), the lock claw 51 is lifted or displaced away from or relative to the first housing 20) to be released from its locked state and the charging connector 10 can be separated from the vehicle-side connector. This release button 52 particularly is pushed down by the thumb while the grip part 13 is gripped by the hand.

The front housing 20 is made e.g. of synthetic resin, particularly substantially has a tubular or cylindrical shape and/or substantially is open forward. One or more, particularly a plurality of terminal accommodating portions 21 substantially project forward (or along the connecting direction CD) in the front housing 20. The terminal accommodating portions 21 particularly have a substantially cylindrical or tubular shape and (particularly female) terminals (not shown) at least partly are accommodated in the respective terminal accommodating portions 21. One or more small-diameter wires connected to these one or more (female) terminals (particularly by crimping) particularly are bundled together in the housing 11 to form a large-diameter wire W, which passes in the grip part 13 and drawn out from the rear end of the grip part 13.

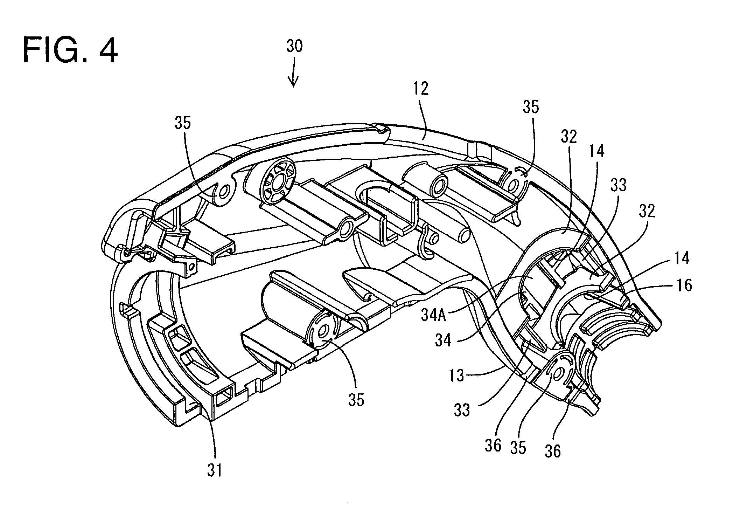

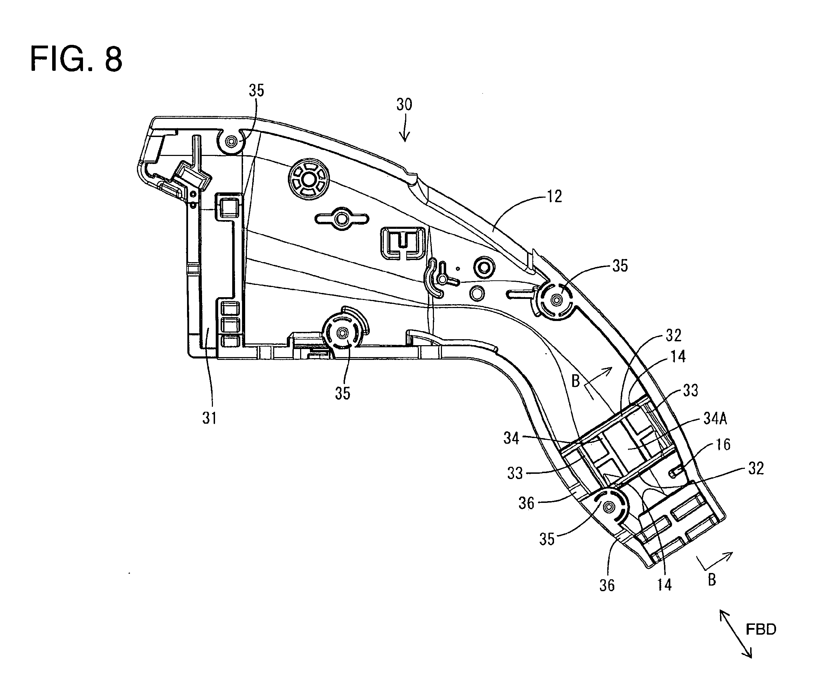

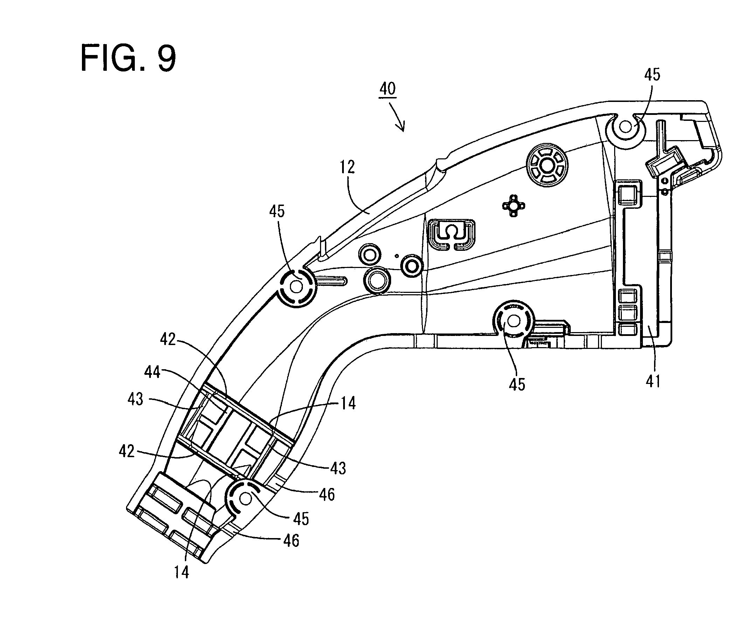

As shown in FIG. 3, a flange portion 22 is circumferentially provided (over at least part of the entire circumference) to project outward on the outer peripheral surface of the rear end of the front housing 20. On the other hand, as shown in FIGS. 4 and 8, a base-side mounting groove 31 into which a (particularly substantially half circumferential) part of the flange portion 22 at least partly is to be fitted or inserted is provided in or near a front end portion of the base-side housing 30. Similarly, as shown in FIG. 9, a cover-side mounting groove 41 into which the remaining circumferential part of the flange portion 22 at least partly is to be fitted or inserted is provided in a front end portion of the cover-side housing 40. When the flange portion 22 is held by the both mounting grooves 31, 41 from lateral (left and right) sides and the both housings 30, 40 are fastened particularly by the one or more bolts B, the front housing 20 is firmly held while being tightly held by the base-side housing 30 and the cover-side housing 40 from lateral (left and right) sides.

In this way, the front end side of the housing 11 is in a backlash-free rigid state and formed as a rigid body, wherefore there is no likelihood of displacing the two housings 30, 40 when the base-side housing 30 and the cover-side housing 40 are assembled and fastened particularly by the bolt(s) B. However, unlike the front housing 20, there particularly is no member firmly held in the grip part 13. Thus, the both housings 30, 40 may be displaced in a tightening direction of the bolts B when the bolts B are tightened.

This is described in more detail below. One or more, particularly a plurality of bolt fastening portions 35, 45 are provided in the housing 11. Out of these bolt fastening portions 35, 45, those 35, 45 most distant from the front housing 20 particularly are provided near the contact (rubber) bush 15 in the grip part 13. In a state before the both housings 30, 40 are assembled, the bolt fastening portion 35 is connected to an opening edge of the base-side housing 30 in the grip part 13 and/or the bolt fastening portion 45 is connected to an opening edge of the cover-side housing 40 in the grip part 13 as shown in FIGS. 8 and 9. When the one or more bolts B are fastened to these one or more bolt fastening portions 35, 45, a force acting in a clockwise direction about the bolt fastening portion 45 particularly may be produced or occur in the cover-side housing 40. As a result, the opening edge located at a side opposite to the bolt fastening portion 45 particularly may try to rotate toward the bolt fastening portion 35 of the base-side housing 30.

Accordingly, at least one positioning rib 16 is provided in the base-side housing 30 to properly position the cover-side housing 40, particularly to prevent the rotation or displacement of the cover-side housing 40. Since this positioning rib 16 particularly is connected to the opening edge substantially facing the opening edge where the bolt fastening portion 35 is provided and/or particularly is arranged as far apart as possible from the bolt fastening portion 35, the proper positioning is particularly effective and a force in a rotational direction particularly can be minimized. The positioning rib 16 particularly projects into the interior of the cover-side housing 40 from the opening edge of the base-side housing 30. Thus, when the both housings 30, 40 are assembled in proper postures, the positioning rib 16 substantially is in contact with the inner surface of the cover-side housing 40. This particularly prevents the rotation of the cover-side housing 40.

The (particularly metal) clip 60 has a (particularly substantially box-shaped) main body 61. A mounting portion where the main body 61 is to be mounted is provided in the housing 11. As can be understood from the comparison of FIGS. 8 and 9, this mounting portion particularly substantially is bilaterally symmetrically divided by the base-side housing 30 and the cover-side housing 40 and/or the mounting portion of the base-side housing 30 and that of the cover-side housing 40 particularly are arranged to substantially face each other with the both housings 30, 40 assembled.

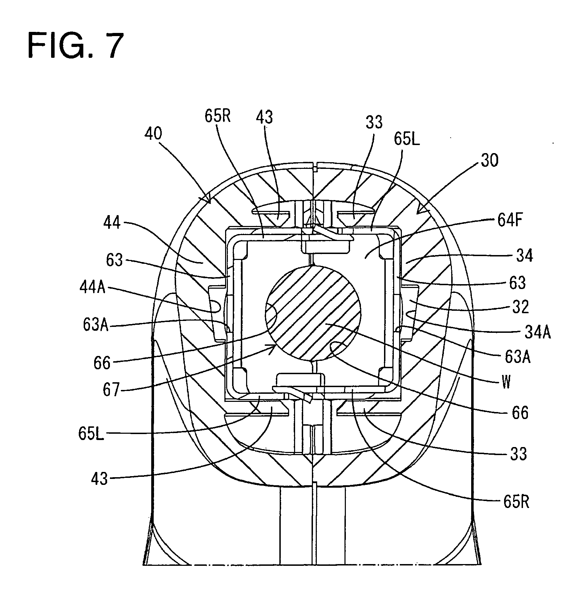

As shown in FIG. 8, the mounting portion of the base-side housing 30 includes one or more, particularly a pair of base-side retaining portion 32, 32 for preventing forward and/or backward movements of the main body 61, one or more, particularly a pair of base-side restricting portions 33, 33 for preventing upward and/or downward movements of the main body 61 and/or one or more, particularly a pair of base-side tightly holding portions 34, 34 for preventing leftward and/or rightward movements of the main body 61. On the other hand, the mounting portion of the cover-side housing 40 includes one or more, particularly a pair of cover-side retaining portion 42, 42 for preventing forward and/or backward movements of the main body 61, one or more, particularly a pair of cover-side restricting portions 43, 43 for preventing upward and/or downward movements of the main body 61 and/or one or more, particularly a pair of cover-side tightly holding portions 44, 44 for preventing leftward and/or rightward movements of the main body 61. Here, vertical direction and lateral direction are based on FIG. 7.

The (both) base-side retaining portion(s) 32, 32 and the (both) cover-side retaining portion(s) 42, 42 substantially are all plate-like and/or held substantially in surface contact with the front and/or rear surfaces of the main body 61 as shown in FIG. 6 to prevent the inclination of the main body 61 while preventing forward and/or backward movements of the main body 61. Further, a passage hole 14 through which the wire W is passed is formed between the (both) base-side retaining portion(s) 32, 32 and the (both) cover-side retaining portion(s) 42, 42.

As shown in FIGS. 8 and 9, the base-side tightly holding portions 34 and the cover-side tightly holding portions 44 particularly are each composed of or comprise a front-back rib extending in forward and backward directions FBD and a vertical rib extending in the vertical direction (or at an angle different from 0° or 180°, preferably substantially normal to the forward and backward directions FBD). Specifically, shown two front-back ribs substantially are arranged in parallel and/or shown two vertical ribs substantially are arranged in series. As shown in FIG. 7, the base-side tightly holding portions 34 and the cover-side tightly holding portions 44 particularly are substantially in line contact with the left and right surfaces of the main body 61 and/or prevent the inclination of the main body 61 while preventing lateral (leftward and/or rightward) movements of the main body 61.

The (both) base-side restricting portions 33, 33 and the (both) cover-side restricting portions 43, 43 particularly substantially are all plate-like and substantially facing parts of the base-side restricting portions 33 and the cover-side restricting portions 43 are spaced apart by a specified (predetermined or predeterminable) distance in the lateral direction as shown in FIG. 7. Further, the both base-side restricting portions 33, 33 particularly are substantially in surface contact with the upper and lower surfaces of the main body 61 and prevent the inclination of the main body 61 while preventing upward and/or downward movements of the main body 61. On the other hand, the (both) cover-side restricting portions 43, 43 particularly are substantially in surface contact with the upper and lower surfaces of the main body 61 and/or prevent the inclination of the main body 61 while preventing upward and/or downward movements of the main body 61. That is, the main body 61 of the (metal) clip 60 particularly is so held as not to rotate relative to the housing 11 since being prevented from moving in three directions (vertical direction, lateral direction and forward and backward directions) and also from being inclined.

Out of the front and rear pairs of retaining portions 32, 42, the rear retaining portions 32, 42 particularly are connected to the bolt fastening portions 35, 45. One or more recesses 36, 46 are formed at the front and/or rear sides of the bolt fastening portions 35, 45 on the opening edges of the (both) housings 30, 40. When the both housings 30, 40 are assembled, one or more, particularly a pair of (front and/or rear) water drainage holes are formed by or near the base-side recesses 36 and/or the cover-side recesses 46. This causes water having entered the interior of the grip part 13 to be discharged to the outside through the both water drainage holes.

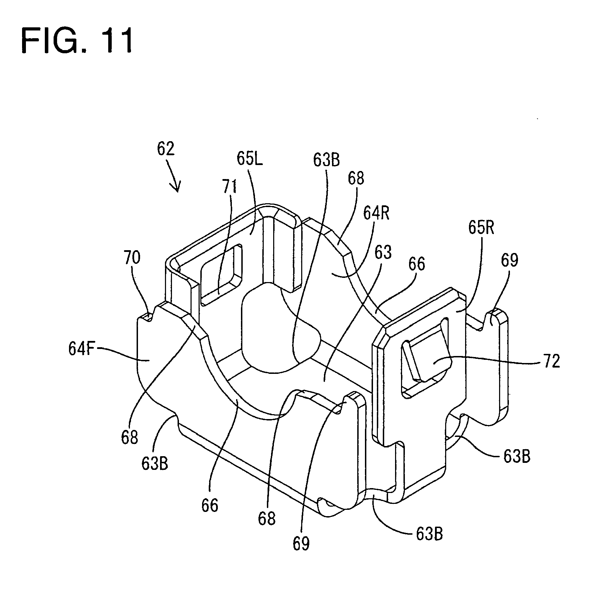

Specifically, the main body 61 of the (metal) clip 60 is formed by assembling half members 62 shown in FIG. 11 with each other. The both half members 62 particularly are identical components and include each a bottom wall 63, a front wall 64F and a rear wall 64R standing upward from the front and rear edges of the bottom wall 63 while substantially facing each other, and a pair of left and right side walls 65L, 65R standing upward from the left and right edges of the bottom wall 63 while substantially facing each other. One or more openings 63B are formed at four corners of the bottom wall 63. Water having entered the interior of the main body 61 can be discharged to the outside by these one or more opening 63B.

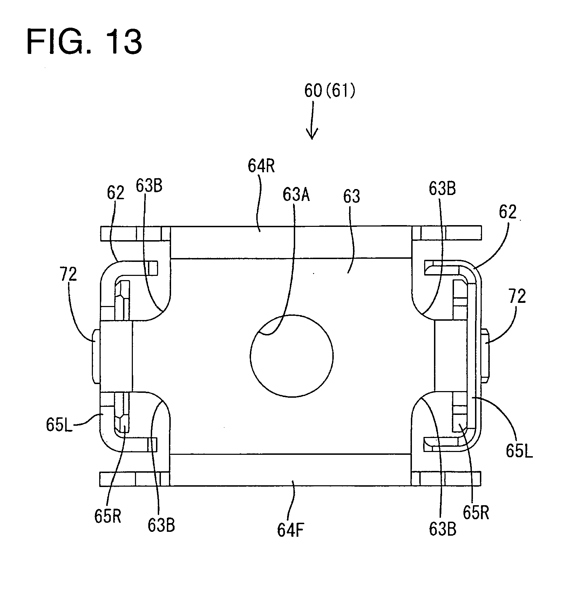

As shown in FIG. 13, a (particularly substantially round) hole 63A is formed to penetrate through (particularly the center of) the bottom wall 63. With the both half members 62, 62 assembled, the both (round) holes 63A, 63A are coaxially arranged as shown in FIG. 13. Further, as shown in FIG. 7, the bottom wall 63 is tightly held by the base-side tightly holding portions 34 and the cover-side tightly holding portions 44 from left and right sides. One or more grooves 34A, 44A are formed at positions of the tightly holding portions 34, 44 corresponding to the (both) round hole(s) 63A, 63A. In this way, water having entered the interior of the main body 61 of the (metal) clip 60 can be discharged to the outside via the round holes 63A, the grooves 34A, 44A and the recesses 36, 46.

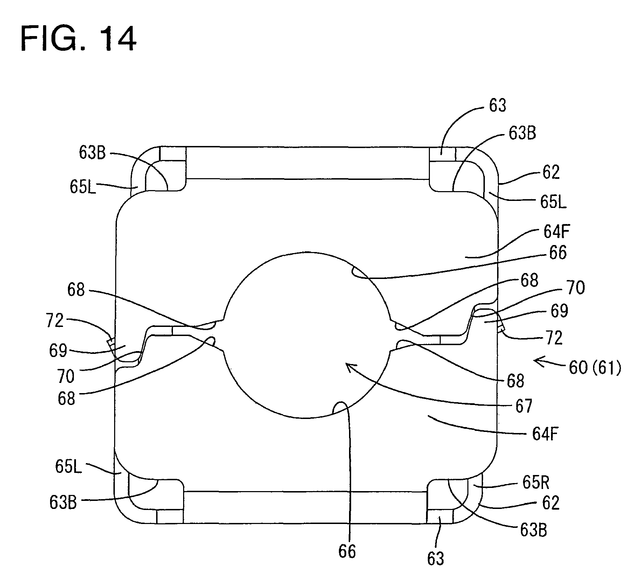

As shown in FIG. 14, respective end edges of the (particularly both) front walls 64A particularly are arranged to substantially face each other and/or butt each other from left and/or right sides. The butting edges of the both front walls 64A, 64A include each an arcuate curved portion 66. A wire insertion hole 67 through which the wire W is at least partly inserted particularly is formed by assembling the two half members 62, 62 such that the curved portions 66, 66 face each other. With the wire W tightly held by the both half members 62, 62, the curved portions 66, 66 particularly bite in or engage the wire W as shown in FIG. 6, but this biting or engagement specifically only resiliently presses the wire W without damaging the insulation coating of the wire W. Thus, the wire W can be firmly retained without being damaged by the metal clip 60.

Further, as shown in FIG. 14, one or more, particularly a pair of escaping portions 68, 68 inclined radially outwardly of the wire insertion hole 67 are provided at the (particularly opposite ends of each) curved portion 66. One or more escaping spaces communicating with the wire insertion hole 67 are formed in areas sandwiched between the escaping portions 68, 68 with the both half members 62, 62 assembled. The wire W can partly escape into these escaping space(s) when being excessively tightly held by the curved portions 66, 66. Further, the front and rear walls 64F, 64R are deformed away from each other with the bottom wall 63 as a center when the curved portions 66, 66 are firmly pressed against the wire W, whereby a pressing force acting on the wire W can be relaxed. By these, damage of the wire W by the curved portions 66, 66 can be further prevented.

As shown in FIG. 14, the both wire insertion holes 67, 67 particularly substantially are coaxially arranged while being spaced apart in the longitudinal direction of the wire W inserted through the both wire insertion holes 67, 67. Thus, a pressing force acting on the wire W can be reduced as compared with the case where the wire W is held only by one wire insertion hole 67.

At least one positioning projection 68 is provided on (particularly one end of each of the butting edges of) the both front walls 64F, 64F, and a stepped portion 70 into which the mating positioning projection 69 at least partly is to be fitted is provide on the other end. With the both half members 62, 62 assembled, the positioning projection(s) 69 is/are fitted in the stepped portion(s) 70 to be locked in the vertical direction, thereby preventing displacements of the both half members 62, 62.

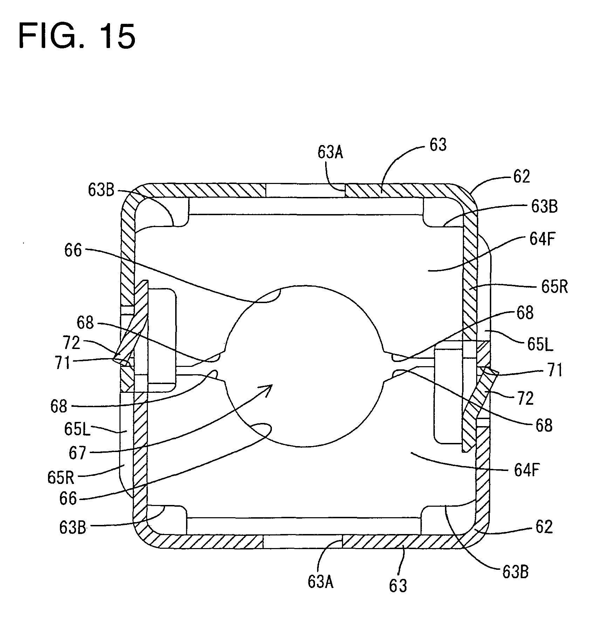

A locking hole 71 particularly is formed to penetrate through one of the left and right side walls 65L, 65R, and a resiliently deformable locking piece 72 is provided at the other particularly by cutting and bending. With the both half members 62, 62 assembled, the locking piece 72 of the one half member 62 at least partly is fitted into the locking hole 71 of the other half member 62 and the tip of the locking piece 72 is engaged with the inner surface of the locking hole 71 as shown in FIG. 15, whereby the both half members 62, 62 are retained. Note that, with the locking piece(s) 72 fitted in the locking hole(s) 71, the positioning projection(s) 69 and the stepped portion(s) 70 particularly come into contact if it is tried to separate the locking pieces 72 from the locking holes 71 in a direction perpendicular to an assembling direction of the both half members 62, 62. This causes the locking pieces 72 to be held fitted in the locking holes 71 and the both half members 62, 62 to be held assembled.

Next, functions of this embodiment constructed as described above are described. First, the components such as the front housing 20 and the lever 50 are assembled with the base-side housing 30 and the (particularly metal) clip 60 is mounted on the wire W. In mounting the metal clip 60, the wire W particularly is supported by the both curved portions 66 of one half member 62 and, in this state, the other half member 62 is assembled with the one half member 62 to tightly hold the wire W by the curved portions 66, 66 of the both half members 62, 62. In this way, the (metal) clip 60 is fixed to the wire W.

Subsequently, the (metal) clip 60 is mounted in a proper posture between the both base-side retaining portions 32, 32 in the grip part 13 and between the both base-side restricting portions 33, 33 in the grip part 13. In this state, the front and rear walls 64F, 64R of the half member 62 particularly substantially are in surface contact with the both base-side retaining portions 32, 32, the left and right side walls 65L, 65R of the half member 62 particularly substantially are in surface contact with the both base-side restricting portions 33, 33 and/or the bottom wall 63 of the half member 62 particularly substantially is in line contact with the base-side tightly holding portions 34. When the other half member 62 is assembled with the one half member 62, the wire W is pressed by the curved portions 66, 66. When reaching proper mount positions while being resiliently deformed by the lateral (left and/or right) side walls 65L, 65R, the (both) locking pieces 72, 72 resiliently at least partly return and at least partly are fitted into the (both) locking holes 71, 71. In this way, the two half members 62, 62 are assembled to form the main body 61, and this main body 61 is fixed to the wire W.

Subsequently, when the cover-side housing 40 is assembled with the base-side housing 30, the flange portion 22 of the front housing 20 at least partly is fitted into the mounting grooves 31, 41 of the both housings 30, 40 and the front housing 20 is tightly held by the both housings 30, 40. Subsequently, the one or more bolts B are tightened into the one or more, particularly the plurality of bolt fastening portions 35, 45. Here, as the one or more bolts B are tightened into the bolt fastening portions 35, 45 in the grip part 13, the cover-side housing 40 may try to rotate in a clockwise direction due to a torque produced at the time of tightening. However, the inner surface of the cover-side housing 40 substantially comes into contact with the positioning rib(s) 16 of the base-side housing 30, thereby preventing the rotation of the cover-side housing 40. By tightening all the bolts B in this way, the charging connector 10 is completed.

As described above, in this embodiment, the main body 61 of the (metal) clip 60 particularly is retained by being held from front and/or rear side(s) by the retaining portions 32, 42, held from upper and/or lower sides by the restricting portions 33, 43 and/or held from lateral (left and/or right) side(s) by the tightly holding portions 34, 44. Accordingly, the rotation of the main body 61 of the metal clip 60 about the axis of the wire W and/or its displacement in the grip part 13 is/are prevented and the main body 61 particularly is retained in the longitudinal direction of the wire W. Further, since the wire W particularly can be uniformly pressed by the curved portions 66, 66, the damage of the wire W can be prevented. Furthermore, since the escaping portions 68 particularly are provided to allow the wire W to partly escape and a pair of front and rear wire insertion holes 67 are provided, a pressing force acting on the wire W can be reduced and the damage of the wire W can be further prevented.

Further, the cover-side housing 40 may try to rotate in the clockwise direction about the bolt fastening portion 35 when the bolt B is tightened. However, since the at least one positioning rib 16 is provided on the opening edge at the side opposite to the bolt fastening portion 35 in the grip part 13, the rotation of the cover-side housing 40 can be prevented by bringing this at least one positioning rib 16 into contact with the inner surface of the cover-side housing 40. That is, it particularly is sufficient to provide the positioning rib(s) 16 only in the base-side housing 30 and it is not necessary to provide the cover-side housing 40 with a certain displacement preventing mechanism. Thus, the both housings 30, 40 can be positioned without being subject to spatial restriction. Further, since the positioning rib(s) 16 particularly is provided at the position distant from the bolt fastening portion 35, a force acting on the positioning rib 16 in a rotational direction can be minimized.

Accordingly, to mount a wire holding member in such a state as not to rotate relative to a housing while preventing the damage of a wire, there is provided a clip 60, particularly a metal clip 60) to be mounted in a housing 11 constituting or forming part of a charging connector 10. The (metal) clip 60 includes a (particularly substantially box-shaped) main body 61 formed by assembling a pair of half members 62, 62 with each other. The main body 61 is prevented from moving in longitudinal and/or circumferential directions of a wire W relative to the housing 11 by the surface contact of the outer surface of the main body 61 with the inner surface of the housing 11. One or more wire insertion holes 67 through which the wire W is to be inserted are formed in outer surface(s) of the main body 61. The one or more wire insertion holes are formed by assembling the both half members 62, 62 such that pairs of curved portions 66, 66 (particularly formed by cutting butting edges of the both half members 62, 62 in a curved manner) substantially face each other. The wire W is to be held in the main body 61 by being tightly held by the curved portions 66, 66.

### <Other Embodiments>

The present invention is not limited to the above described and illustrated embodiment. For example, the following embodiments are also included in the technical scope of the present invention.
(1) Although the metal clip 60 is used as the wire holding member in the above embodiment, a clip made of resin may be used according to the present invention. In this case, two half members may be linked by a flexible hinge.
(2) Although the curved portions are arcuate in the above embodiments, the shape of the curved portions is not limited to the arcuate shape according to the present invention and another curved shape may be adopted provided that the curved portions having such a shape can tightly hold the wire W.
(3) Although the two escaping portions 68, 68 are provided at the opposite ends of the curved portion 66 in the above embodiment, an escaping portion may be provided in the center of the curved portion according to the present invention.
(4) Although the pair of front and rear wire insertion holes 67, 67 are provided in the main body 61, only one wire insertion hole may be provided according to the present invention.

### LIST OF REFERENCE NUMERALS

- 10 ...: charging connector
- 11 ...: housing
- 13 ...: grip part
- 16 ...: positioning rib (positioning portion)
- 20 ...: front housing (connector connecting portion)
- 30 ...: base-side housing (one half member)
- 35 ...: bolt fastening portion
- 40 ...: cover-side housing (other half member)
- 60 ...: metal clip (wire holding member)
- 61 ...: main body
- 62 ...: half-member
- 67 ...: wire insertion hole
- 66 ...: curved portion
- 68 ...: escaping portion

## Claims

1. A wire holding member (60) to be mounted in a housing (11) forming part of a charging connector (10), comprising a main body (61) formed by assembling a pair of half members (62) with each other, wherein:
the main body (61) is to be prevented from moving in longitudinal and/or circumferential directions of a wire (W) relative to the housing (11) by the surface contact of the outer surface of the main body (61) with the inner surface of the housing (11);
at least one wire insertion hole (67) through which the wire (W) is to be inserted is formed in the outer surface of the main body (61);
the wire insertion hole (67) is formed by assembling the both half members (62) such that a pair of curved portions (66) formed by cutting butting edges of the both half members (62) in a curved manner substantially face each other; and
the wire (W) is to be held in the main body (61) by being tightly held by the both curved portions (66).

2. A wire holding member according to claim 1, wherein the pair of half members (62) are identical components.

3. A wire holding member according to any one of the preceding claims, wherein the curved portions (66) are arcuate.

4. A wire holding member according to any one of the preceding claims, wherein one or more escaping portions (68) inclined radially outwardly of the wire insertion hole (67) are provided at the opposite ends of the curved portion (66).

5. A wire holding member according to any one of the preceding claims, wherein a pair of wire insertion holes (67) are coaxially arranged while being spaced apart in the longitudinal direction of the wire (W).

6. A charging connector (10) comprising a housing (11), wherein at least one wire (W) is drawn out from the housing (11), the wire (W) being held fixed with respect to the housing (11) by a holding member (60) according to any one of the preceding claims, the holding member (60) being mounted into a mounting portion provided in the housing (11).

7. A charging connector according to claim 6, wherein the housing (11) is integrally formed by fixing a pair of half members (30, 40) to each other.

8. A charging connector according to claim 7, wherein a connector connecting portion (20) is mounted in a front end portion of the housing (11) and tightly held by the both half members (30, 40); and at least one positioning portion (16) for positioning the both half members (30, 40) is provided at a position of one half member (30) distant from the connector connecting portion (20) and comes into contact with the inner surface of the other half member (40) when the both half members (30, 40) are assembled in proper postures.

9. A charging connector according to any one of the preceding claims 6 to 8, wherein the mounting portion substantially is bilaterally symmetrically divided by both half members (30, 40) and/or the mounting portion of the one half member (30) and that of the other half member (40) are arranged to substantially face each other with the both half members (30, 40) assembled.

10. A charging connector according to claim 8 or 9, wherein the positioning portion (16) is provided adjacent to the mounting portion.

11. A charging connector according to any one of the preceding claims 6 to 10, wherein the half members (30, 40) are fixed to each other by bolting.

12. A charging connector according to claim 11, wherein a plurality of bolt fastening portions (35) are arranged in the one half member (30); and wherein the positioning portion (16) is provided at such a position as to prevent the other half member (40) from rotating upon receiving a force in a rotational direction produced as the bolting is performed at the bolt fastening portion (35) arranged at a position most distant from the connector connecting portion (20).

13. A charging connector according to claim 12, wherein the positioning portion (16) is connected to one opening edge of the one half member (30) and the bolt fastening portion (35) is connected to another opening edge substantially facing the one opening edge.

14. A charging connector according to any one of the preceding claims 6 to 13, wherein the housing (10) includes a grip part (13) which is arranged behind the connector connecting portion (20) and from which at least one wire (W) is drawn out; and the positioning portion (16) is provided in the grip part (13).
